# EUROPEAN PATENT APPLICATION

(11) **EP 3 113 572 A1**
(43) Date of publication of application: **04.01.2017**
(21) Application number: 14887364.9
(22) Date of filing: 22.07.2014
(51) Int. Cl.: H04W 76/04, H04W 24/02

(54) **METHOD AND APPARATUS FOR CONTROLLING CREATION OF MOBILE COMMUNICATION NETWORK CONNECTION**

(30) Priority: 26.03.2014 CN 201410118135
(71) Applicant: ZTE Corporation, Shenzhen, Guangdong 518057 (CN)
(72) Inventor: ZHONG, Hua, Shenzhen Guangdong 518057 (CN); WANG, Xin, Shenzhen Guangdong 518057 (CN); REN, Jie, Shenzhen Guangdong 518057 (CN)
(74) Representative: Schröer, Gernot H.
(86) International application number: PCT/CN2014/082664
(87) International publication number: WO 2015/143798

(57) **Abstract**

A method for controlling creation of a mobile communication network connection, the method includes the following steps: after establishing a network connection with a user equipment, a control device detecting and receiving service data transmitted by the user equipment, and acquiring service feature information corresponding to the service data (S11); the control device analyzing whether the acquired service feature information contains a preset identifier (S12); and if the acquired service feature information does not contain the preset identifier, the control device disconnecting the network connection with the user equipment after transmitting the service data to a destination end corresponding to the service data (S13).

## Description

### Technical Field

The present invention relates to the technical field of M2M (Machine to Machine) in a mobile communication network, in particular to a method and an apparatus for controlling creation of a mobile communication network connection.

### Background of the Related Art

M2M communication is data communication which involves one or more entity devices and does not need human intervention, and is also called as MTC (Machine-Type Communication). M2M communication is increasingly becoming an important mobile communication mode. Since service features of M2M are not consistent with service features which need to be considered in traditional mobile communication network design, the existing mobile communication networks (e.g., 4G network LTE, 3G network, TD-CDMA network) are not optimized aiming at the service features of M2M communication, and consequently a system has difficulty to satisfy the demands of M2M service application when a great number of M2M networks are accessed. For example, user equipment and a base station in some M2M communication are in a short connection state, the user equipment needs to frequently transmit small data packets and the base station very quickly releases a connection after receiving data, such that the user equipment further needs to continuously initiate an access process in order to transmit subsequent data. Under this situation, a great number of access requests will decrease the service quality of the mobile communication network. The user equipment and the base station in some M2M communication are in a long connection state, if the service of the M2M user equipment transmits short data packets at an interval of very long time, the base station is in connection with the user equipment for a long time before the data are received, and consequently the waste of the network resources will be caused.

Therefore, how to guarantee the service operation and simultaneously reduce the influence on the service quality of the mobile communication network and the utilization rate of the network resources as possible is a problem which needs to be urgently solved at present.

The above-mentioned contents are only used for assisting in understanding the technical solution of the present invention and shall not be recognized as the existing art.

### Summary of the Invention

The embodiments of the present invention provide a method and an apparatus for controlling creation of a mobile communication network connection, intending to realize effective and reasonable control of creation and disconnection of the network connection with a user equipment, thereby improving the service quality of a mobile communication network and the utilization rate of network resources.

A method for controlling creation of a mobile communication network connection comprises:
after establishing a network connection with a user equipment, a control device detecting and receiving service data transmitted by the user equipment, and acquiring first service feature information corresponding to the service data;
the control device analyzing whether the first service feature information contains a preset identifier; and
when the first service feature information does not contain the preset identifier, the control device disconnecting the network connection with the user equipment after transmitting the service data to a destination end corresponding to the service data.

Preferably, after the step of the control device analyzing whether the service feature information contains the preset identifier, the method further comprises:
if the first service feature information contains the preset identifier, the control device keeping the network connection with the user equipment.

Preferably, after establishing the network connection with the user equipment, before the step of the control device detecting and receiving the service data transmitted by the user equipment, and acquiring the first service feature information corresponding to the service data, the method further comprises:
when detecting and receiving a creation request of a network connection transmitted by the user equipment, the control device acquiring second service feature information corresponding to the creation request; and
the control device allocating network resources to the user equipment according to the second service feature information for the user equipment to transmit the service data to the destination end corresponding to the service data.

Preferably, the step of the control device allocating the network resources to the user equipment according to the second service feature information for the user equipment to transmit the service data to the destination end corresponding to the service data comprises:
the control device analyzing whether current idle network resources satisfy a network resource condition corresponding to the creation request; and
when the current idle network resources satisfy the network resource condition corresponding to the creation request, the control device allocating the network resources to the user equipment for the user equipment to transmit the service data to the destination end corresponding to the service data.

Preferably, after the step of the control device analyzing whether current idle network resources satisfy the network resource condition corresponding to the creation request, the method further comprises:
when the current idle network resources do not satisfy the network resource condition corresponding to the creation request, the control device analyzing whether the second service feature information contains an emergency service identifier; and
when the second service feature information contains the emergency service identifier, the control device creating a network connection for the user equipment, and when the current idle network resources satisfy the network resource condition corresponding to the creation request, then allocating the network resources to the user equipment for the user equipment to transmit the service data to the destination end corresponding to the service data.

Preferably, the step of the control device creating a network connection for the user equipment, and when the current idle network resources satisfy the network resource condition corresponding to the creation request, then allocating the network resources to the user equipment for the user equipment to transmit the service data to the destination end corresponding to the service data further comprises:
when a preset time is reached and the current idle network resources do not satisfy the network resource condition corresponding to the creation request, the control device disconnecting the network connection with the user equipment.

Preferably, when the current idle network resources do not satisfy the network resource condition corresponding to the creation request, after the step of the control device analyzing whether the acquired service feature information contains the emergency service identifier, the method further comprises:
when the second service feature information does not contain the emergency service identifier, the control device refusing the creation request of the user equipment.

The present invention further provides an apparatus for controlling creation of a mobile communication network connection, the apparatus comprises:
a processing module configured to, after establishing a network connection with a user equipment, detect and receive service data transmitted by the user equipment, and acquire first service feature information corresponding to the service data;
an analysis module configured to analyze whether the first service feature information contains a preset identifier; and
a control module configured to, when the first service feature information does not contain the preset identifier, disconnect the network connection with the user equipment after successfully transmitting the service data to a destination end corresponding to a transmission request.

Preferably, the control module is further configured to, when the first service feature information contains the preset identifier, keep the network connection with the user equipment.

Preferably, the apparatus further comprises a creation module,
the processing module is further configured to, when detecting and receiving a creation request of a network connection transmitted by the user equipment, acquire second service feature information corresponding to the creation request; and
the creation module is configured to allocate network resources to the user equipment according to the second service feature information for the user equipment to transmit the service data to the destination end corresponding to the service data.

Preferably, the analysis module is further configured to analyze whether current idle network resources satisfy a network resource condition corresponding to the creation request; and
the creation module is configured to, when the current idle network resources satisfy the network resource condition corresponding to the creation request, allocate the network resources to the user equipment for the user equipment to transmit the service data to the destination end corresponding to the service data.

Preferably, the analysis module is further configured to, when the current idle network resources do not satisfy the network resource condition corresponding to the creation request, analyze whether the second service feature information contains an emergency service identifier; and
the control module is configured to, when the second service feature information contains the emergency service identifier, create a network connection for the user equipment, and when the current idle network resources satisfy the network resource condition corresponding to the creation request, then allocate the network resources to the user equipment for the user equipment to transmit the service data to the destination end corresponding to the service data.

Preferably, the control module is configured to, when a preset time is reached and the current idle network resources do not satisfy the network resource condition corresponding to the creation request, disconnect the network connection with the user equipment.

Preferably, the control module is further configured to, when the second service feature information does not contain the emergency service identifier, make the control device refuse the creation request of the user equipment.

The embodiment of the present invention further provides a computer program, comprising program instructions, wherein, when the program instructions are executed by a control device, the control device is enabled to implement the above mentioned method.

The embodiment of the present invention further provides a carrier carrying the above mentioned computer program.

According to the present invention, after establishing a network connection with a user equipment, a control device detects and receives service data transmitted by the user equipment, and acquires service feature information corresponding to the service data; the control device analyzes whether the acquired service feature information contains a preset identifier; and when the acquired service feature information does not contain the preset identifier, the control device disconnects the network connection with the user equipment after transmitting the service data to a destination end corresponding to the service data. In the process of transmitting a request of service data, the user equipment carries information about whether the service data of this type are transmitted again, and carries information about a period of transmitting the service data of this type again, such that the base station can effectively and reasonably control the creation and disconnection of the network connection with the user equipment, thereby improving the service quality of the mobile communication network and the utilization rate of the network resources.

### Brief Description of Drawings

FIG. 1 is a flow diagram of embodiment 1 of a method for controlling creation of a mobile communication network connection provided by the present invention;
FIG. 2 is a flow diagram of embodiment 2 of a method for controlling creation of a mobile communication network connection provided by the present invention;
FIG.3 is a diagram of functional modules of a preferred embodiment of an apparatus for controlling creation of a mobile communication network connection provided by the present invention.

The realization of the purposes, functional features and advantages of the present invention will be further described in combination with the embodiments by referring to the drawings.

### Preferred Embodiments of the Invention

The specific embodiments of the present invention will be described below in detail in combination with the drawings. It needs to be stated that the embodiments in the present application and the features in the embodiments may be freely combined under the situation of no conflict.

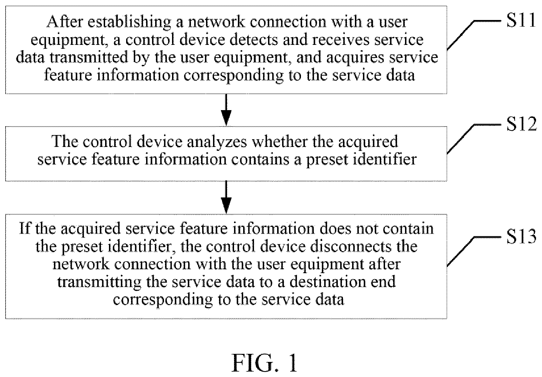

FIG. 1 illustrates a flow diagram of embodiment 1 of a method for controlling creation of a mobile communication network connection provided by the present invention.

In needs to be emphasized that, the flow diagram illustrated in Fig. 1 is just a preferred embodiment and one skilled in the art should know that any embodiment constructed around the concept of the present invention shall not be departed from the scope covered by the following technical solution:

After establishing a network connection with a user equipment, a control device detects and receives service data transmitted by the user equipment, and acquires service feature information corresponding to the service data; the control device analyzes whether the acquired service feature information contains a preset identifier; and if the acquired service feature information does not contain the preset identifier, the control device disconnects the network connection with the user equipment after transmitting the service data to a destination end corresponding to the service data.

This embodiment gradually implements the control of network connection creation according to the steps as follows:
In step S11, after establishing a network connection with a user equipment, a control device detects and receives service data transmitted by the user equipment, and acquires service feature information corresponding to the service data.

In this embodiment, the control device may be a device used for controlling the mobile communication network connection such as a base station or the like. In M2M communication of mobile communication, the base station receives a creation request of a network connection transmitted by the user equipment and allocates network resources according to the received creation request such that the user equipment transmits the service data to be transmitted to a destination end corresponding to the service data.

When detecting and receiving the creation request of a network connection transmitted by the user equipment, the base station acquires the service feature information corresponding to the creation request; and the base station allocates the network resources for the user equipment according to the acquired service feature information such that the user equipment transmits the service data to the destination end corresponding to the service data. The above-mentioned process is a process that the base station creates the network connection with the user equipment, this process is needed only when the network connection with the user equipment is not successfully established before the user equipment initiates the service request, and this process is not always needed at each service request.

After the base station establishes the network connection with the user equipment, the control device detects and receives the service data transmitted by the user equipment, and acquires the service feature information corresponding to the service data. The service feature information includes but not limited to network resources needed by the service data transmission, service data size, service data type, service emergency degree of service data, transmission period of service data, etc.

In step S12, the control device analyzes whether the acquired service feature information contains a preset identifier.

In step S13, if the acquired service feature information does not contain the preset identifier, the control device disconnects the network connection with the user equipment after transmitting the service data to a destination end corresponding to the service data.

In this embodiment, the base station analyzes whether the acquired service feature information contains a preset identifier, i.e., analyzes whether the acquired service feature information contains information about that service data of the same type as the service data further need to be transmitted after a certain period. When the acquired service feature information does not contain the preset identifier, i.e., the acquired service feature information does not contain information about that service data of the same type as the service data further need to be transmitted after a certain period, and after the service data are transmitted to the destination end corresponding to the service data, the base station disconnects the network connection with the user equipment, i.e., the base station releases the network resources allocated for the user equipment and allocates the released network resources for other user equipments such that the other user equipments transmit data by using the released network resources.

Preferably, the process that the control device transmits the service data to the destination end corresponding to the service data is before the control device disconnects the network connection with the user equipment and after the control device establishes the network connection with the user equipment. Situations that the acquired service feature information does not contain the preset identifier include: the service feature information comprises transmission period information of service data of the same type as the service data and information about that the transmission period of the service data of the same type as the service data is greater than a preset period, or the service feature information does not comprise the transmission period information of the service data of the same type as the service data. The preset period may be a preset time interval preset by a user, such as 10s, 20s or 40s for which timing is started when the service data are successfully transmitted to the destination end corresponding to the service data.

When the acquired service feature information contains the preset identifier, i.e., when the acquired service feature information comprises the transmission period information of the service data of the same type as the service data and information about that the transmission period of the service data of the same type as the service data is less than or equal to the preset period, the network connection with the user equipment is kept. In other words, in the process of transmitting the request of the service data, the user equipment carries information about whether the service data of this type are to be transmitted again, and carries information about a period of transmitting the service data of this type again, such that the base station can effectively and reasonably control the creation and disconnection of the network connection with the user equipment, thereby improving the utilization rate of the mobile communication network resources. In other embodiments of the present invention, the preset identifier may also be an identifier such as "0" or "1" which is preset by the user, and when the acquired service feature information does not comprise the identifier "0" and after the service data are transmitted to the destination end corresponding to the service data, the network connection with the user equipment is disconnected; and when the acquired service feature information comprises the identifier "0", the network connection with the user equipment is kept.

In order to better describe the technical solution provided by the embodiment of the present invention, an LTE (Long Term Evolution) network is taken as an example. In a data structure of an RRC (Radio Resource Control) Connection Request message in 3GPP TS36331 protocol, an M2M-Access option is added in a service access request initiated by the user equipment to indicate the service feature of this service access request. When the service access type is M2M-Access, the user equipment indicates the service feature of this service access request through a newly added cell M2M-Indication. The service features mainly include the following:
a. size (traffic), i.e., data throughput of service data which are expected to be transmitted firstly in an access, and the parameter ranges from 0 to k and the corresponding data size is 1kb*2^{k};
b. service access delay, and the parameter ranges from 0 to k and tolerable maximum delay corresponding to the service access is 1s*2^{k};
c. service emergency degree identifier, and the parameter is true or false which indicates whether the service access request may be refused; and
d. preset identifier (i.e., period identifier), which is optional, and the parameter ranges from 0 to k, which correspondingly indicates that, after a period of 10s*2^{k}, the user equipment will again initiate service data of the same type as the first time of transmission.

For example, when the acquired service feature information does not comprise the service feature d, i.e., when the acquired service feature information does not contain the period identifier or when the acquired service feature information comprises the service feature d but the contained period is greater than the preset period, and after the service data are successfully transmitted to the destination end corresponding to the service data, the network connection with the user equipment is disconnected; and when the acquired service feature information comprises the service feature d, i.e., when the acquired service feature information contains the period identifier and the contained period is less than or equal to the preset period, the network connection with the user equipment is kept.

In this embodiment, after establishing the network connection with the user equipment, the control device detects and receives the service data transmitted by the user equipment, and acquires the service feature information corresponding to the service data; the control device analyzes whether the acquired service feature information contains the preset identifier; and if the acquired service feature information does not contain the preset identifier, the control device disconnects the network connection with the user equipment after transmitting the service data to the destination end corresponding to the service data. In the process of transmitting a request of service data, the user equipment carries information about whether the service data of this type are to be transmitted again, and carries information about a period of transmitting the service data of this type again, such that the base station can effectively and reasonably control the creation and disconnection of the network connection with the user equipment, thereby improving the service quality of the mobile communication network and the utilization rate of the network resources.

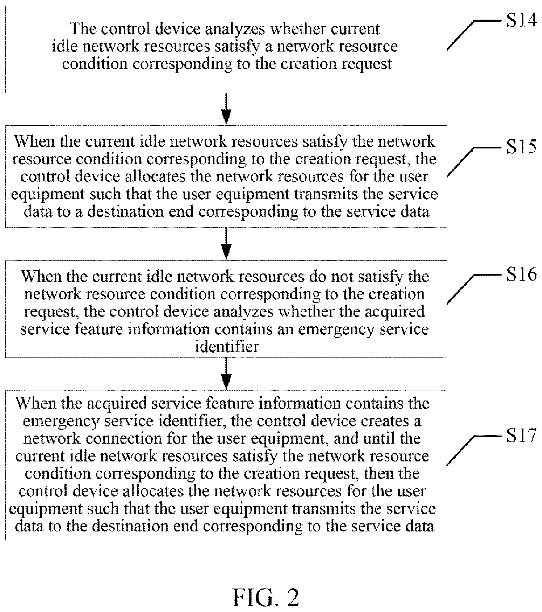

Fig. 2 illustrates a flow diagram of embodiment 2 of a method for controlling creation of a mobile communication network connection provided by the present invention. Based on the embodiment 1, the step of the control device allocating the network resources for the user equipment according to the acquired service feature information such that the user equipment transmits the service data to the destination end corresponding to the service data comprises:
In step S 14, the control device analyzes whether current idle network resources satisfy a network resource condition corresponding to the creation request.
In step S15, when the current idle network resources satisfy the network resource condition corresponding to the creation request, the control device allocates the network resources for the user equipment such that the user equipment transmits the service data to the destination end corresponding to the service data.
In step S16, when the current idle network resources do not satisfy the network resource condition corresponding to the creation request, the control device analyzes whether the acquired service feature information contains an emergency service identifier.
In step S17, when the acquired service feature information contains the emergency service identifier, the control device creates a network connection for the user equipment, and until the current idle network resources satisfy the network resource condition corresponding to the creation request, then the control device allocates the network resources for the user equipment such that the user equipment transmits the service data to the destination end corresponding to the service data.

In this embodiment, when detecting and receiving the creation request of a network connection transmitted by the user equipment and after acquiring the service feature information corresponding to the creation request, the base station analyzes whether current idle network resources satisfy the network resource condition corresponding to the creation request, i.e., analyzes whether the current idle network resources are enough to support transmission of the service data corresponding to the creation request. When the current idle network resources satisfy the network resource condition corresponding to the creation request, the network resources are allocated for the user equipment such that the user equipment transmits the service data to the destination end corresponding to the service data. When the current idle network resources do not satisfy the network resource condition corresponding to the creation request, the base station analyzes whether the acquired service feature information contains an emergency service identifier, i.e., analyzes whether the creation request may be refused. When the acquired service feature information contains the emergency service identifier, i.e., the creation request may not be refused, the network connection is created for the user equipment, and when the current idle network resources satisfy the network resource condition corresponding to the creation request, then the network resources are allocated for the user equipment such that the user equipment transmits the service data to the destination end corresponding to the service data. In addition, this type of network connection creation request which may not be refused may be processed at preset priority, such that the network data are allocated for the creation request carrying emergency service data as soon as possible and the user equipment transmits the emergency service data to the destination end corresponding to the service data in time, thereby improving the user experience. When the acquired service feature information does not contain the emergency service identifier, i.e., when the creation request may be refused, the creation request of the user equipment is refused. In other words, when the current idle network resources do not satisfy the network resource condition corresponding to the creation request and the creation request may be refused, the base station refuses the creation request of the user equipment; and when the current idle network resources satisfy the network resource condition corresponding to the creation request and the creation request may be refused, the network connection corresponding to the creation request may be completed or refused through presetting.

In other embodiments of the present invention, in order to save the network resources for transmitting service data by other user equipments, when a preset time is reached and the current idle network resources do not satisfy the network resource condition corresponding to the creation request, the base station disconnects the network connection with the user equipment. In other words, when the preset time is reached, the base station directly refuses the creation request instead of waiting for that the current idle network resources satisfy the network resource condition corresponding to the creation request. The base station waits for that the user equipment transmits the creation request again. Within the preset time, once there are enough idle network resources which satisfy the network resource condition corresponding to the creation request, the base station allocates the network resources for the creation request such that the user equipment transmits the service data to the destination end corresponding to the service data. The preset time may be any proper time interval preset by the user, such as 5s or 30s.

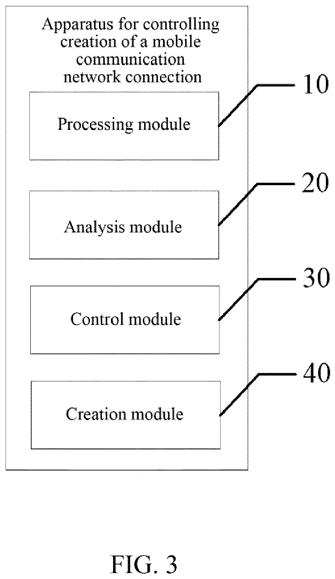

FIG. 3 illustrates a diagram of functional modules of a preferred embodiment of an apparatus for controlling creation of a mobile communication network connection provided by the present invention. The apparatus comprises a processing module 10, a creation module 20, an analysis module 30 and a control module 40.

The processing module 10 is configured to, after establishing a network connection with a user equipment, detect and receive service data transmitted by the user equipment, and acquire service feature information corresponding to the service data.

In this embodiment, in M2M communication of mobile communication, the base station receives a creation request of a network connection transmitted by each user equipment and allocates corresponding network resources according to the received creation request such that the user equipment transmits the service data to be transmitted to a destination end corresponding to the service data.

The processing module 10 is further configured to, when detecting and receiving a creation request of a network connection transmitted by the user equipment, acquire service feature information corresponding to the creation request.

The creation module 20 is configured to allocate network resources for the user equipment according to the acquired service feature information such that the user equipment transmits the service data to the destination end corresponding to the service data. The above-mentioned process is a process that the base station creates the network connection with the user equipment, this process is needed only when the network connection with the user equipment is not successfully established before the user equipment initiates the service request, and this process is not always needed at each service request.

After the base station establishes the network connection with the user equipment, the base station detects and receives the service data transmitted by the user equipment, and acquires the service feature information corresponding to the service data. The service feature information includes but not limited to network resources needed for the service data transmission, service data size, service data type, service emergency degree of service data, transmission period of service data, etc.

The analysis module 30 is configured to analyze whether the acquired service feature information contains a preset identifier.

The control module 40 is configured to, if the acquired service feature information does not contain the preset identifier, disconnect the network connection with the user equipment after successfully transmitting the service data to a destination end corresponding to the service data.

In this embodiment, the base station analyzes whether the acquired service feature information contains a preset identifier, i.e., analyzes whether the acquired service feature information contains information about that service data of the same type as the service data further need to be transmitted after a certain period. When the acquired service feature information does not contain the preset identifier, i.e., when the acquired service feature information does not contain the information about that service data of the same type as the service data further need to be transmitted after a certain period, and after the service data are transmitted to the destination end corresponding to the service data, the base station disconnects the network connection with the user equipment, i.e., the base station releases the network resources allocated for the user equipment and allocates the released network resources for other user equipments such that the other user equipments transmit data by using the released network resources.

Preferably, the process that the control device transmits the service data to the destination end corresponding to the service data is before the control device disconnects the network connection with the user equipment and after the control device establishes a network connection with the user equipment. Situations that the acquired service feature information does not contain the preset identifier include: the service feature information comprises transmission period information of service data of the same type as the service data and information about that the transmission period of the service data of the same type as the service data is greater than a preset period, or the service feature information comprises the transmission period information of the service data of the same type as the service data. The preset period may be a preset time interval preset by a user, such as 10s, 20s or 40s for which timing is started when the service data are successfully transmitted to the destination end corresponding to the service data.

When the acquired service feature information contains the preset identifier, i.e., when the acquired service feature information comprises the transmission period information of the service data of the same type as the service data and information about that the transmission period of the service data of the same type as the service data is less than or equal to the preset period, the network connection with the user equipment is kept. In other words, in the process of transmitting the request of the service data, the user equipment carries information about whether the service data of this type are to be transmitted again, and carries information about a period of transmitting the service data of this type again, such that the base station can effectively and reasonably control the creation and disconnection of the network connection with the user equipment, thereby improving the utilization rate of the mobile communication network resources. In other embodiments of the present invention, the preset identifier may also be an identifier such as "0" or "1" which is preset by the user, and when the acquired service feature information does not comprise the identifier "0" and after the service data are transmitted to the destination end corresponding to the service data, the network connection with the user equipment is disconnected; and when the acquired service feature information comprises the identifier "0", the network connection with the user equipment is kept.

In order to better describe the technical solution provided by the present invention, an LTE (Long Term Evolution) network is taken as an example. In a data structure of an RRC (Radio Resource Control) Connection Request message in 3GPP TS36331 protocol, an M2M-Access option is added in a service access request initiated by the user equipment to indicate the service feature of this service access request. When the service access type is M2M-Access, the user equipment indicates the service feature of this service access request through a newly added cell M2M-Indication. The service features mainly include the following:
a. size (traffic), i.e., data throughput of service data which are expected to be transmitted firstly in an access, and the parameter ranges from 0 to k and the corresponding data size is 1kb*2^{k};
b. service access delay, and the parameter ranges from 0 to k and tolerable maximum delay corresponding to the service access is 1s*2^{k};
c. service emergency degree identifier, and the parameter is true or false which indicates whether the service access request may be refused; and
d. preset identifier (i.e., period identifier), which is optional, and the parameter ranges from 0 to k, which correspondingly indicates that, after a period of 10s*2^{k}, the user equipment will again initiate service data of the same type as the first time of transmission.

For example, when the acquired service feature information does not comprise the service feature d, i.e., when the acquired service feature information does not contain the period identifier or when the acquired service feature information comprises the service feature d but the contained period is greater than the preset period, and after the service data are successfully transmitted to the destination end corresponding to the service data, the network connection with the user equipment is disconnected; and when the acquired service feature information comprises the service feature d, i.e., when the acquired service feature information contains the period identifier and the contained period is less than or equal to the preset period, the network connection with the user equipment is kept.

In this embodiment, after establishing the network connection with the user equipment, the control device detects and receives the service data transmitted by the user equipment, and acquires the service feature information corresponding to the service data; the control device analyzes whether the acquired service feature information contains the preset identifier; and if the acquired service feature information does not contain the preset identifier, the control device disconnects the network connection with the user equipment after transmitting the service data to the destination end corresponding to the service data. In the process of transmitting a request of service data, the user equipment carries information about whether the service data of this type are to be transmitted again, and carries information about a period of transmitting the service data of this type again, such that the base station can effectively and reasonably control the creation and disconnection of the network connection with the user equipment, thereby improving the service quality of the mobile communication network and the utilization rate of the network resources.

Preferably, the analysis module 30 is further configured to analyze whether current idle network resources satisfy a network resource condition corresponding to the creation request;
the creation module 20 is further configured to, when the current idle network resources satisfy the network resource condition corresponding to the creation request, allocate the network resources for the user equipment such that the user equipment transmits the service data to the destination end corresponding to the service data;
the analysis module 30 is further configured to, when the current idle network resources do not satisfy the network resource condition corresponding to the creation request, analyze whether the acquired service feature information contains an emergency service identifier; and
the creation module 20 is configured to, when the acquired service feature information contains the emergency service identifier, create a network connection for the user equipment, and when the current idle network resources satisfy the network resource condition corresponding to the creation request, then allocate the network resources for the user equipment such that the user equipment transmits the service data to the destination end corresponding to the service data.

In this embodiment, when detecting and receiving the creation request of a network connection transmitted by the user equipment and after acquiring the service feature information corresponding to the creation request, the base station analyzes whether current idle network resources satisfy the network resource condition corresponding to the creation request , i.e., analyzes whether the current idle network resources are enough to support transmission of the service data corresponding to the creation request. When the current idle network resources satisfy the network resource condition corresponding to the creation request, the network resources are allocated for the user equipment such that the user equipment transmits the service data to the destination end corresponding to the service data. When the current idle network resources do not satisfy the network resource condition corresponding to the creation request, the base station analyzes whether the acquired service feature information contains an emergency service identifier, i.e., analyzes whether the creation request may be refused. When the acquired service feature information contains the emergency service identifier, i.e., when the creation request may not be refused, the network connection is created for the user equipment, and when the current idle network resources satisfy the network resource condition corresponding to the creation request, then the network resources are allocated for the user equipment such that the user equipment transmits the service data to the destination end corresponding to the service data. In addition, this type of network connection creation request which may not be refused may be processed with preset priority, such that the network data are allocated for the creation request carrying emergency service data as soon as possible and the user equipment transmits the emergency service data to the destination end corresponding to the service data in time, thereby improving the user experience. When the acquired service feature information does not contain the emergency service identifier, i.e., when the creation request may be refused, the creation request of the user equipment is refused. In other words, when the current idle network resources do not satisfy the network resource condition corresponding to the creation request and the creation request may be refused, the base station refuses the creation request of the user equipment; and when the current idle network resources satisfy the network resource condition corresponding to the creation request and the creation request may be refused, the network connection corresponding to the creation request may be completed or refused through presetting.

In other embodiments of the present invention, in order to save the network resources for transmitting service data by other user equipments, when a preset time is reached and the current idle network resources do not satisfy the network resource condition corresponding to the creation request, the base station disconnects the network connection with the user equipment. In other words, when the preset time is reached, the base station directly refuses the creation request instead of waiting for that the current idle network resources satisfy the network resource condition corresponding to the creation request. The base station waits for that the user equipment transmits the creation request again. Within the preset time, once there are enough idle network resources which satisfy the network resource condition corresponding to the creation request, the base station allocates the network resources for the creation request such that the user equipment transmits the service data to the destination end corresponding to the service data. The preset time may be any proper time interval preset by the user, such as 5s or 30s.

The serial numbers of the embodiments of the present invention are only used for the purpose of description instead of indicating the superiorities of the embodiments. Through the description of the above-mentioned embodiments, one skilled in the art can clearly understand that the methods in the above-mentioned embodiments can be implemented by means of software and necessary general hardware platforms, and of course, can also be implemented by means of hardware. However, under most circumstances, the former one is preferred. Based on such understanding, the essence of the technical solution of the present invention or the part which makes a contribution to the existing art may be reflected in the form of a software product. The computer software product is stored in a storage medium (such as an ROM/RAM, a magnetic disk or a compact disk), comprises a plurality of instructions which are used for enabling a terminal device (which may be a mobile phone, a computer, a server or a network device or the like) to implement the method in each embodiment of the present invention.

The above-mentioned are just preferred embodiments of the present invention and do not hereby limit the patent scope of the present invention. Any equivalent structure, equivalent flow transformation made according to the contents of the description and the drawings of the present invention or direct or indirect application to other related arts shall be also included in the patent protection scope of the present invention.

### Industrial Applicability

The embodiments of the present invention can improve the service quality of the mobile communication network and the utilization rate of the network resources.

## Claims

1. A method for controlling creation of a mobile communication network connection, comprising:
after establishing a network connection with a user equipment, a control device detecting and receiving service data transmitted by the user equipment, and acquiring first service feature information corresponding to the service data;
the control device analyzing whether the first service feature information contains a preset identifier; and
when the first service feature information does not contain the preset identifier, the control device disconnecting the network connection with the user equipment after transmitting the service data to a destination end corresponding to the service data.

2. The method for controlling creation of a mobile communication network connection according to claim 1, wherein, after the step of the control device analyzing whether the service feature information contains the preset identifier, the method further comprises:
if the first service feature information contains the preset identifier, the control device keeping the network connection with the user equipment.

3. The method for controlling creation of a mobile communication network connection according to claim 1 or 2, wherein, after establishing the network connection with the user equipment, before the step of the control device detecting and receiving the service data transmitted by the user equipment, and acquiring the first service feature information corresponding to the service data, the method further comprises:
when detecting and receiving a creation request of a network connection transmitted by the user equipment, the control device acquiring second service feature information corresponding to the creation request; and
the control device allocating network resources to the user equipment according to the second service feature information for the user equipment to transmit the service data to the destination end corresponding to the service data.

4. The method for controlling creation of a mobile communication network connection according to claim 3, wherein the step of the control device allocating the network resources to the user equipment according to the second service feature information for the user equipment to transmit the service data to the destination end corresponding to the service data comprises:
the control device analyzing whether current idle network resources satisfy a network resource condition corresponding to the creation request; and
when the current idle network resources satisfy the network resource condition corresponding to the creation request, the control device allocating the network resources to the user equipment for the user equipment to transmit the service data to the destination end corresponding to the service data.

5. The method for controlling creation of a mobile communication network connection according to claim 3, wherein, after the step of the control device analyzing whether current idle network resources satisfy the network resource condition corresponding to the creation request, the method further comprises:
when the current idle network resources do not satisfy the network resource condition corresponding to the creation request, the control device analyzing whether the second service feature information contains an emergency service identifier; and
when the second service feature information contains the emergency service identifier, the control device creating a network connection for the user equipment, and when the current idle network resources satisfy the network resource condition corresponding to the creation request, then allocating the network resources to the user equipment for the user equipment to transmit the service data to the destination end corresponding to the service data.

6. The method for controlling creation of a mobile communication network connection according to claim 5, wherein the step of the control device creating a network connection for the user equipment, and when the current idle network resources satisfy the network resource condition corresponding to the creation request, then allocating the network resources to the user equipment for the user equipment to transmit the service data to the destination end corresponding to the service data further comprises:
when a preset time is reached and the current idle network resources do not satisfy the network resource condition corresponding to the creation request, the control device disconnecting the network connection with the user equipment.

7. The method for controlling creation of a mobile communication network connection according to claim 5, wherein, when the current idle network resources do not satisfy the network resource condition corresponding to the creation request, after the step of the control device analyzing whether the acquired service feature information contains the emergency service identifier, the method further comprises:
when the second service feature information does not contain the emergency service identifier, the control device refusing the creation request of the user equipment.

8. An apparatus for controlling creation of a mobile communication network connection, comprising:
a processing module configured to, after establishing a network connection with a user equipment, detect and receive service data transmitted by the user equipment, and acquire first service feature information corresponding to the service data;
an analysis module configured to analyze whether the first service feature information contains a preset identifier; and
a control module configured to, when the first service feature information does not contain the preset identifier, disconnect the network connection with the user equipment after successfully transmitting the service data to a destination end corresponding to a transmission request.

9. The apparatus for controlling creation of a mobile communication network connection according to claim 8, wherein,
the control module is further configured to, when the first service feature information contains the preset identifier, keep the network connection with the user equipment.

10. The apparatus for controlling creation of a mobile communication network connection according to claim 8 or 9, wherein the apparatus further comprises a creation module,
the processing module is further configured to, when detecting and receiving a creation request of a network connection transmitted by the user equipment, acquire second service feature information corresponding to the creation request; and
the creation module is configured to allocate network resources to the user equipment according to the second service feature information for the user equipment to transmit the service data to the destination end corresponding to the service data.

11. The apparatus for controlling creation of a mobile communication network connection according to claim 10, wherein,
the analysis module is further configured to analyze whether current idle network resources satisfy a network resource condition corresponding to the creation request; and
the creation module is configured to, when the current idle network resources satisfy the network resource condition corresponding to the creation request, allocate the network resources to the user equipment for the user equipment to transmit the service data to the destination end corresponding to the service data.

12. The apparatus for controlling creation of a mobile communication network connection according to claim 10, wherein,
the analysis module is further configured to, when the current idle network resources do not satisfy the network resource condition corresponding to the creation request, analyze whether the second service feature information contains an emergency service identifier; and
the control module is configured to, when the second service feature information contains the emergency service identifier, create a network connection for the user equipment, and when the current idle network resources satisfy the network resource condition corresponding to the creation request, then allocate the network resources to the user equipment for the user equipment to transmit the service data to the destination end corresponding to the service data.

13. The apparatus for controlling creation of a mobile communication network connection according to claim 12, wherein the control module is configured to, when a preset time is reached and the current idle network resources do not satisfy the network resource condition corresponding to the creation request, disconnect the network connection with the user equipment.

14. The apparatus for controlling creation of a mobile communication network connection according to claim 12, wherein the control module is further configured to, when the second service feature information does not contain the emergency service identifier, make a control device refuse the creation request of the user equipment.

15. A computer program, comprising program instructions which, when executed by a control device, enable the control device to implement the method according to any one of claims 1-7.

16. A carrier carrying the computer program according to claim 15.
